# NEUE EUROPÄISCHE PATENTSCHRIFT

(11) **EP 2 177 664 B2**
(45) Veröffentlichungstag und Bekanntmachung des Hinweises auf die Entscheidung über den Einspruch: **22.05.2024**
(45) Hinweis auf die Patenterteilung: 11.01.2012
(21) Anmeldenummer: 08018311.4
(22) Anmeldetag: 20.10.2008
(51) Int. Cl.: E01B 31/13

(54) **Verfahren und Vorrichtung zum spanabhebenden Bearbeiten eines Werkstücks mit einer geometrisch bestimmten Schneide**
Method and device for machine cutting a workpiece with a geometrically set blade
Procédé et dispositif destiné au traitement par enlèvement de copeaux d'une pièce usinée à l'aide d'une lame de coupe déterminée géométriquement

(43) Veröffentlichungstag der Anmeldung: 21.04.2010
(73) Patentinhaber: Schweerbau International GmbH & Co. KG, 31655 Stadthagen (DE)
(72) Erfinder: Mevert, Frank, 31714 Lauenhagen (DE); Sander, Kurt, 31675 Bückeburg (DE)
(74) Vertreter: Scheffler, Jörg

(56) Entgegenhaltungen:
- WO-A1-02/06587
- WO-A1-95/20071
- AT-B- 396 764
- AT-B- 400 863
- DE-A1- 3 524 123
- DE-C- 286 101
- DE-U- 7 005 215
- DE-U1- 8 034 887
- JP-A- S5 621 712

## Beschreibung

Die Erfindung betrifft eine Vorrichtung mit einer geometrisch bestimmten Schneide zum spanabhebenden Bearbeiten eines Werkstücks, insbesondere von Schienen eines Gleiskörpers, gemäß des Anspruch 1.

Ein Werkstück im Sinne der Erfindung ist ein zu bearbeitender Körper mit einer zur Bearbeitung im Wesentlichen ebenen Oberfläche. Das Werkstück kann ein lang gestreckter Körper sein, der eine definierte Querschnittsgeometrie aufweist. Das Werkstück im Sinne der Erfindung kann aus unterschiedlichen Materialien, beispielsweise Kunststoff oder Holz, insbesondere aber auch aus Stahl, bestehen. Derartige Werkstücke werden in allen technischen Bereichen zu unterschiedlichen Zwecken eingesetzt. Exemplarisch sei hier der Einsatzzweck eines Werkstücks als Schiene eines Gleiskörpers näher betrachtet.

Werkstücke müssen im Rahmen ihrer Herstellung bearbeitet werden. Dabei liegt häufig ein besonderes Augenmerk auf einer exakten Querschnittsgeometrie. Darüber hinaus ist die Herstellung einer ebenen und/oder planen Oberfläche von Bedeutung. Gerade bei einem mechanisch beanspruchten Werkstück - wie einer Schiene eines Gleiskörpers - müssen die Querschnittsgeometrie und die Oberfläche regelmäßig wiederhergestellt werden.

Zur Herstellung einer planen Oberfläche eines Werkstücks sind zahlreiche spanabhebende Bearbeitungsverfahren mit geometrisch bestimmter Schneide bekannt, beispielsweise Hobeln und Fräsen. Üblicherweise wird dabei das Werkstück durch die und/oder an der Vorrichtung zum Bearbeiten des Werkstücks vorbei bewegt. Für eine Bearbeitung von Werkstücken unbestimmter Länge, wie Schienen, wird üblicherweise die Vorrichtung zum Bearbeiten des Werkstücks entlang und/oder auf dem ortsfest angeordneten Werkstück bewegt.

Zum Bearbeiten eines solchen Werkstücks werden üblicherweise Vorrichtungen mit einem rotierend angetriebenen Fräser, wie in der DE 10 2006 008 093 A1 beschrieben, eingesetzt. Der Fräser weist einen Satz von Schneiden zum Fräsen eines Schienenkopfs auf, deren Querschnittsgeometrie sich aus annähernd kreisförmigen Teilbögen verschiedener Radien zusammensetzt, wobei jeder Teilbogen auf der Lauffläche der Gleisschiene eine Spur bildet. Der mehrspurige Fräser weist nebeneinander mehrere geradlinige Schneideelemente auf, die der Kontur des Schienenkopfs angepasst sind und die Bearbeitung der gesamten Kontur in einem Arbeitsgang ermöglichen. Die einzelnen Schneiden können auch versetzt zueinander auf dem Fräser angeordnet sein. Auch die WO 02/06587 A1 beschreibt ein Verfahren zum Reprofilieren mindestens des Fahrspiegels einer Schiene, vorzugsweise des den Fahrspiegel aufweisenden, konvexen Teils des Schienenkopf-Querschnittprofils einer Schiene, insbesondere einer Eisenbahnschiene, durch Umfangfräsen mit mehr als fünf in Längsrichtung der Schiene nebeneinanderliegenden Frässpuren. Weitere Vorrichtungen zum spanabhebenden Nachbearbeiten, insbesondere zum Fräsen von im Gleis verlegten Schienenköpfen, werden in den Druckschriften EP 0 952 255 B1, US 4 583 893, US 5 549 505, EP 0 668 398 B1, EP 0 668 397 B1, US 4 275 499, DE 32 22 208 C2, WO 95/20071 A1 und DE 80 34 887 U1 beschrieben. Nachteilig beim Fräsen sind die auf der bearbeiteten Oberfläche auftretenden Bearbeitungsspuren, beispielsweise Welligkeiten und/oder Riffel.

Demgegenüber sind Vorrichtungen bekannt, bei denen die Schienenköpfe mit einem sogenannten Schienenhobel bearbeitet werden. Die Druckschrift DE 28 41 506 C2 zeigt eine solche Vorrichtung, bei der spanabhebende Hobelmesser bei einer kontinuierlichen Vorschubbewegung die Schiene bearbeiten. Ein Schienenhobel beseitigt aufgrund der hohen Abtragstiefe Unregelmäßigkeiten selbst an stark verriffelten Gleisabschnitten bei einer hohen Arbeitsgenauigkeit. Mittels des Hobelns können plane Oberflächen erzeugt werden, die gegenüber dem Fräsen nur noch zu vernachlässigende Bearbeitungsspuren aufweisen. Nachteilig beim Hobeln, vor allem gegenüber den Fräsverfahren, sind die geringere Vorschubgeschwindigkeit, ein höherer Kraftbedarf in Vorschubrichtung, ein langer Span und/oder die oft längeren Stillstandszeiten.

Daher ist es derzeit üblich, Schienen zunächst in einem ersten Arbeitsgang mit einer Fräse zu bearbeiten. Anschließend, in einem weiteren Arbeitsgang, werden dann die beim Fräsen auf der bearbeiteten Oberfläche auftretenden Bearbeitungsspuren, wie Welligkeiten und/oder Spurbilder, durch Schleifen reduziert. Vorrichtungen zum Schleifen werden in den Druckschriften US 4 583 895 A1, DE 32 27 343 A1, DE 28 01 110 A1 und EP 1 918 458 A1 beschrieben.

Die Druckschrift AT 400 863 B beschreibt eine Vorrichtung zum spanabhebenden Nachbearbeiten eines Schienenkopfs mithilfe eines entlang des Bearbeitungsstreifens geführten, umlaufenden Werkzeugs, bei dem die Schneiden in Trägern gehalten sind, die Glieder einer endlos um Umlenkräder geführten Gliederkette bilden.

Der Erfindung liegt die Aufgabe zugrunde, eine Möglichkeit zu schaffen, die Oberfläche eines Werkstücks in einem Arbeitsgang und bei einer hohen Vorschubgeschwindigkeit derart spanabhebend zu bearbeiten, dass die Oberfläche plan ist und äußerst geringfügige Bearbeitungsspuren, wie Welligkeiten und/oder Spurbilder, aufweist. Der Erfindung liegt auch die Aufgabe zugrunde, die Bearbeitung eines Werkstücks, insbesondere einer Schiene eines Gleiskörpers, gegenüber den Nachteilen des Standes der Technik zu verbessern.

Diese Aufgabe wird erfindungsgemäß mit einer Vorrichtung gemäß den Merkmalen des Anspruchs 1 gelöst. Die weitere Ausgestaltung der Erfindung ist den Unteransprüchen zu entnehmen.

Hierdurch wird es möglich, dass die Oberfläche des Werkstücks bei einer hohen Vorschubgeschwindigkeit nachbearbeitet werden kann, ohne dass Welligkeiten auftreten. Hierbei werden die Vorteile des Hobelns mit den Vorteilen des Fräsens verbunden. Die wie beim Fräsen umlaufende Schneide kann mit einer hohen Geschwindigkeit relativ zum Werkstück bewegt werden. Die geradlinige Bewegung der Schneide während der spanabhebenden Bearbeitung führt zu einer Bearbeitung des Werkstücks, die dem Hobeln gleicht. In dieser Kombination ist in einem Arbeitsgang eine hohe Vorschubgeschwindigkeit bei geringem Kraftaufwand und starkem Abtrag möglich, wobei die Oberfläche des bearbeiteten Werkstücks plan und ohne Welligkeiten ist. Eine Nachbearbeitung, beispielsweise ein Schleifen, ist mit diesem Drehhobelverfahren entbehrlich. Das unterbrechungsfreie Drehhobeln ermöglicht eine Planbearbeitung eines theoretisch unendlich langen Werkstücks beliebiger Querschnittsgeometrie.

Günstig ist es, dass die Bewegung der Schneide auf der Umlaufbahn von einer weiteren, den Abstand der Schneide zur Achse vergrößernden Bewegung überlagert wird. Hierdurch wird es möglich, die fräsende Bewegung der Schneide mit hohen Umdrehungsgeschwindigkeiten und großer Kraftaufnahme zu realisieren. Durch die zumindest lokal im Bearbeitungsbereich auf die Schneide aufgebrachte, überlagerte Bewegung wird die Schneide parallel zur Vorschubrichtung des Werkstücks bewegt. Die Schneide wird bei der überlagerten Bewegung relativ zu der umlaufenden Bewegung geschwenkt, gedreht und/oder verschoben. Die Schneide wird bei der mit der umlaufenden Bewegung überlagerten Bewegung insbesondere linear in Richtung des Werkstücks verschoben. Die Bewegung der Schneide parallel zur Vorschubrichtung erfolgt im Gleichlauf oder im Gegenlauf.

Vorteilhaft ist es, dass mit der überlagernden, weiteren Bewegung die Schneide aus der Umlaufbahn herausbewegt wird. Hierdurch wird es möglich, dass die Schneide während eines längeren Zeitraumes mit dem Werkstück in Eingriff ist als bei einer ausschließlich rotierenden Bewegung der Schneide. Gleichzeitig wird es möglich, auf die Eingrifftiefe der Schneide lokal individuell einzuwirken. So kann der Eingriff der Schneide, ohne den Umlauf zu unterbrechen, verändert oder unterbrochen werden.

Günstig ist es, dass der Träger bei der Bewegung auf der Umlaufbahn um eine Achse rotatorisch und/oder auf einer Kreisbahn bewegt wird. Eine rotatorische Umlaufbewegung auf einer Kreisbahn ist sowohl in ihrer Wirkung auf die Arbeitsleistung und das Arbeitsergebnis als auch in ihrer technischen Ausführbarkeit besonders vorteilhaft.

Erfindungsgemäß ist also eine Vorrichtung gemäß Anspruch 1 vorgesehen. Hierdurch ist es möglich, dass die Schneide mittels der umlaufenden Bewegung des angetriebenen Trägers mit einer hohen Geschwindigkeit bei geringem Kraftaufwand relativ zum Werkstück bewegbar ist und gleichzeitig zumindest zeitweise parallel zur Oberfläche des Werkstücks bewegt wird. Dies ermöglicht einen Spanabtrag, der wie beim allgemein bekannten Hobeln auf dem Werkstück eine plane Oberfläche ohne Welligkeiten erzeugt. Eine solche Vorrichtung kann ohne Unterbrechung nahezu unendlich lange Werkstücke, beispielsweise Schienen eines Gleiskörpers, bearbeiten. Durch unvermeidlichen Verschleiß der Schneide sind Unterbrechungen im Vortrieb unumgänglich. Günstig ist es, dass die Schneide an der Aufnahme und/oder am Träger lösbar fixierbar ist. Hierdurch ist es möglich, dass die Unterbrechungen zur Wartung und Instandsetzung der Vorrichtung, insbesondere der Schneiden, kurz sind.

Vorteilhaft ist es, dass die Vorrichtung einen Betätigungskörper aufweist, durch den die Schneide und/oder die Aufnahme aus ihrer Umlaufbahn heraus auslenkbar ist. Hierdurch ist es möglich, dass die überlagerte Bewegung der Schneide unabhängig von der Umlaufbewegung des Trägers der Schneide ist. Dabei ist es günstig, dass die Aufnahme insbesondere in ihrer Länge einstellbar ist. Hierdurch ist es möglich, den Abstand zwischen der Achse des Trägers und der Schneide, insbesondere in einer Nulllage der Schneide, zu justieren.

Für die mechanische Realisierung hat sich als günstig erwiesen, dass der Träger als ein um eine Achse rotatorisch auf einer Kreisbahn bewegbarer Körper, insbesondere als Rad oder Scheibe, ausgebildet ist. Hierdurch ist es möglich, dass die Schneide mit einem geringen Energieaufwand auf das Werkstück große Kräfte ausüben und mit einer hohen Umlaufgeschwindigkeit bewegt werden kann. Die Schneide ist dabei am äußeren Umfang des Trägers angeordnet. Diese Gestaltungsform hat sich bereits bei den sogenannten Abwälzfräsern bewährt.

Günstig ist es, dass der Betätigungskörper innerhalb der Umlaufbahn des Trägers an dem Träger gleitend und/oder frei rollend anlegbar angeordnet ist. Hierdurch ist es möglich, dass der Betätigungskörper zumindest mittelbar auf die Schneide einwirken kann, ohne über eine aufwendige Mechanik mit der Vorrichtung, insbesondere mit dem Antrieb des Trägers, verbunden zu sein. Der Betätigungskörper ist somit unabhängig von der Bewegung des Trägers und der Schneide. Der Betätigungskörper bildet für die Schneide ein Widerlager, wobei der jeweilige Abstand des Betätigungskörpers zu dem Träger einstellbar ist. Hierdurch ist es möglich, dass der Eingriff der Schneide einstellbar ist und/oder die Schneide - ohne Unterbrechung des Umlaufs - für die Bearbeitung des Werkstücks ausblendbar ist. Bei der Nachbearbeitung von Schienen eines Gleiskörpers beispielsweise dürfen im Bereich von Weichen bestimmte Abschnitte der Oberfläche des Werkstücks nicht bearbeitet werden. Eine Unterbrechung des kontinuierlichen Vorschubs der Vorrichtung wird durch ein solches Ausblenden der Schneide vermieden. Ein an dem Träger frei rollend angeordneter Betätigungskörper weist einen besonders geringen Verschleiß auf.

Eine vorteilhafte Ausgestaltung der Erfindung ist, dass die Vorrichtung mehrere Betätigungskörper aufweist, deren jeweiliger Abstand zu dem Träger unabhängig voneinander einstellbar ist. Hierdurch ist es möglich, dass bei einer Vorrichtung, die mehrere nebeneinander angeordnete Schneiden aufweist, einige der Schneiden unabhängig von benachbarten Schneiden in ihrem Eingriff einstellbar und/oder ausblendbar sind. Diese Einstellbarkeit ist besonders leicht zu realisieren, wenn der Betätigungskörper auf einer exzentrischen Welle angeordnet ist.

Für die Erzeugung einer weiteren, die umlaufende Bewegung der Schneide überlagernden Bewegung ist es günstig, dass die Aufnahme als ein eine Nocke aufweisender Stößel ausgeführt ist. Hierdurch ist es möglich, dass die Schneide aus der Umlaufbahn ohne eine Einwirkung auf den Träger auslenkbar ist. Mittels der Nocke ist die Aufnahme bei einem Kontakt der Nocke mit dem Betätigungskörper auslenkbar. Die Bewegungsachse der Aufnahme ist gegenüber der Tangente der Umlaufbahn der Schneide geneigt. Die Bewegungsachse ist gerade nicht parallel zu der Tangente der Umlaufbahn des Trägers.

Die Eingrifftiefe der Schneide ist mittels eines einstellbaren Betätigungskörpers während der Bearbeitung des Werkstücks veränderbar. Hierdurch ist es möglich, dass eine Anpassung der Vorrichtung an eine geänderte Querschnittsgeometrie des Werkstücks ohne zeitaufwendigen Werkzeugwechsel möglich ist. Durch die Änderung der Eingrifftiefe einzelner Schneiden kann die Querschnittsgeometrie des Werkstücks während der Bearbeitung stetig verändert werden.

Der Träger führt die Aufnahme mit der Schneide an dem Betätigungskörper vorbei, wobei die Nocke gegen den Betätigungskörper drückt. Da der Betätigungskörper der Nocke nicht ausweicht, ist die Schneide durch einen Kontakt der Nocke mit dem Betätigungskörper aus der Umlaufbahn heraus auslenkbar. Durch den Kontakt der Nocke mit dem Betätigungskörper werden die Aufnahme und somit auch die Schneide aus der Umlaufbahn hinausbewegt. Die Geometrie der Nocke ist dabei dem gewünschten Bewegungsablauf der Schneide angepasst. Vorteilhaft ist es, dass die Schneide an der Aufnahme lösbar fixierbar ist. Die Aufnahme weist eine Rückstelleinrichtung auf, welche als eine Feder und/oder ein druckbeaufschlagtes Fluidum ausgeführt ist. Mittels der Rückstelleinrichtung ist eine gegen den Betätigungskörper gerichtete Kraft auf die Aufnahme ausübbar. Der Betätigungskörper ist als rollender Anschlag ausführbar. Hierdurch ist es möglich, dass an dem Betätigungskörper, an den Nocken und somit auch an der Schneide der Verschleiß geringer ist. Durch den Betätigungskörper ist ein verbesserter Rundlauf des Trägers bei einem geringeren Rundlauffehler möglich.

Günstig ist es, dass an dem Träger eine Vielzahl von Schneiden hinter- und/oder nebeneinander, insbesondere versetzt zueinander, angeordnet sind. Durch mehrere hintereinander angeordnete Schneiden ist es möglich, den Verschleiß der einzelnen Schneiden zu reduzieren und so den Nutzungszeitraum der Vorrichtung zwischen zwei Wartungsunterbrechungen zu verlängern. Mehrere nebeneinander, insbesondere versetzt angeordnete Schneiden ermöglichen, dass die bearbeitete Oberfläche keine Spurbilder aufweist. Somit reicht ein Arbeitsgang zur Herstellung einer hobelplanen Oberfläche des Werkstücks. Eine Nachbearbeitung, wie zum Beispiel Schleifen, ist nicht notwendig. Für die Verkürzung der Wartungs- und Instandsetzungsarbeiten ist es vorteilhaft, dass der Träger aus mehreren Segmenten und/oder Ringen aufgebaut ist, wobei an einem Segment und/oder Ring mehrere Schneiden mit den ihnen zugeordneten Aufnahmen angeordnet sind. Der Vorrichtung sind einzelne und/oder gleichzeitig mehrere miteinander verbundene Ringe und/oder Segmente zu Wartungs- und/oder Instandsetzungsarbeiten entnehmbar. Hierdurch ist der Austausch einzelner und/oder mehrerer Schneiden und/oder Aufnahmen innerhalb kurzer Zeit möglich.

Günstig ist es, dass die Vorrichtung und das Werkstück relativ zueinander beweglich sind. Dabei ist die Vorrichtung auf dem insbesondere in Form von Schienen eines Gleiskörpers ausgebildeten Werkstück verfahrbar. Hierdurch ist es möglich, die Vorrichtung beispielsweise in einem Fahrzeug, insbesondere Gleisfahrzeug, zu integrieren und/oder die Vorrichtung als ein solches Fahrzeug auszugestalten. Mittels einer derart gestalteten Vorrichtung ist es möglich, auch ortsfeste Werkstücke schnell und präzise zu bearbeiten.

Vorteilhaft ist es, dass die Vorrichtung eine Verkleidung aufweist. Hierdurch ist es möglich, dass die Vorrichtung vor Verschmutzung und/oder Beschädigung durch äußere Einflüsse geschützt ist.

Von Vorteil ist es, dass die nebeneinander und/ oder hintereinander angeordneten Schneiden entsprechend der Querschnittsgeometrie des Werkstücks ausgebildet sind. Hierdurch ist es möglich, dass mittels der Vorrichtung ein Werkstück mit komplexer Querschnittsgeometrie bearbeitbar ist. Geometrisch bestimmte Schneiden ermöglichen eine Bearbeitung unterschiedlicher Querschnittsgeometrien wie Geraden, Kurven und/ oder Polygone. Mittels der Einstellbarkeit der Größe der Auslenkung der einzelnen Schneiden ist es möglich, die Querschnittsgeometrie des Werkstücks während der Bearbeitung zu variieren. Hierdurch wird es möglich, auch Einfluss auf die Geometrie des Werkstücks in seiner Längsachse zu nehmen.

Die Erfindung lässt verschiedene Ausführungsformen zu. Zur weiteren Verdeutlichung ihres Grundprinzips ist eine davon in der Zeichnung dargestellt und wird nachfolgend beschrieben.

Diese zeigt in
- Fig. 1: eine Seitenansicht der Vorrichtung in einer schematischen Darstellung;
- Fig. 2: eine geschnittene Darstellung der in Figur 1 gezeigten Vorrichtung;
- Fig. 3: eine geschnittene Darstellung einer Aufnahme der Vorrichtung in einem vergrößerten Ausschnitt der in Figur 1 dargestellten Vorrichtung;
- Fig. 4: eine Ansicht der Anordnung mehrerer Schneiden an der in Figur 1 gezeigten Vorrichtung.

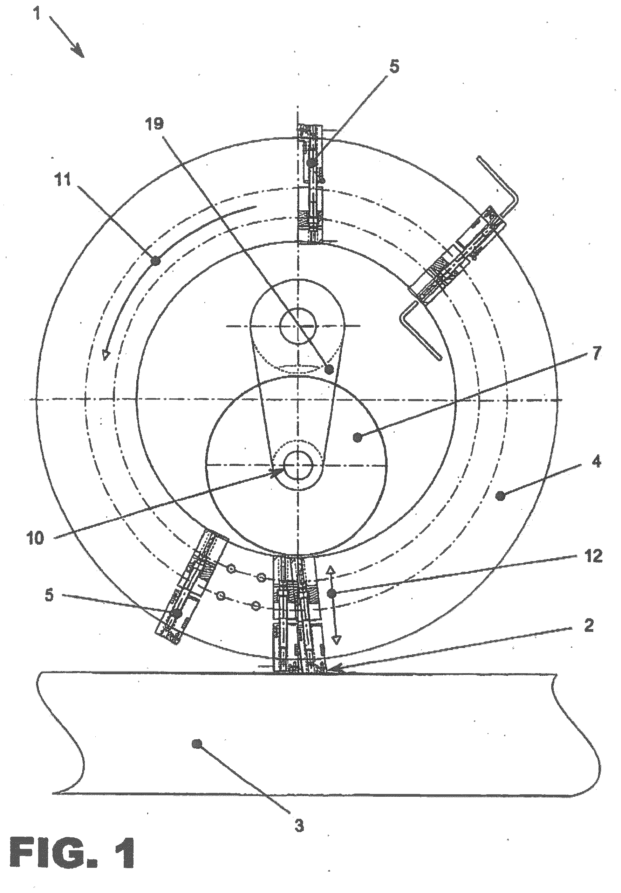

Die Figuren 1 bis 3 zeigen eine Vorrichtung 1 mit einer geometrisch bestimmten Schneide 2 zum spanabhebenden Bearbeiten eines Werkstücks 3. Das in dieser Zeichnung im Schnitt dargestellte Werkstück 3 ist eine Schiene eines Gleiskörpers. Die Vorrichtung 1 dient der Bearbeitung des Werkstücks 3. Bei einer Schiene ist nach einer bestimmten Betriebsdauer und/oder bei auftretendem Verschleiß die Oberfläche nachzuarbeiten, also zu glätten, Material der Lauffläche abzutragen, um Haarrisse zu entfernen und/oder die Querschnittsgeometrie wiederherzustellen. Dabei liegt besonderes Augenmerk auf dem Herstellen einer möglichst glatten Oberfläche, insbesondere im Bereich des Radlaufs. Die Bearbeitung des Werkstücks 3 erfolgt mit einer Schneide 2, die mittels einer Aufnahme 5 an einem um die Achse 9 umlaufend antreibbaren Träger 4 angeordnet ist. Eine Verkleidung 8 verhindert, dass Schmutz und Fremdkörper in die Vorrichtung 1 eindringen und diese beschädigen. Um Wartungsarbeiten zügig durchführen zu können, ist die Verkleidung 8 mittels Schrauben lösbar fixierbar.

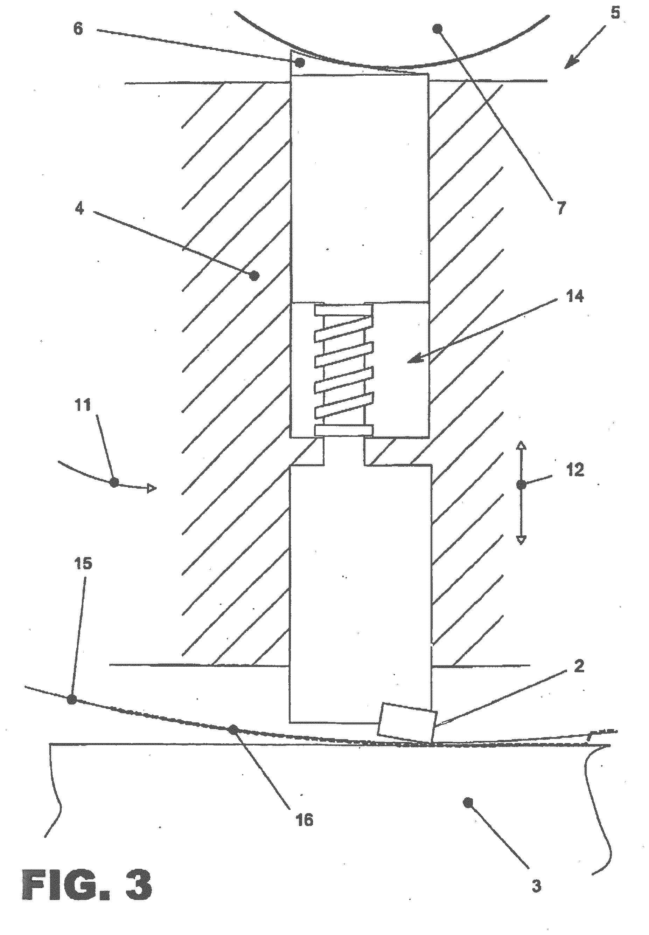

In dem in Figur 3 gezeigten Ausführungsbeispiel wird die Schneide 2 von dem Träger 4 auf einer kreisförmigen Umlaufbahn 15 entsprechend dem Pfeil 11 bewegt. Diese Bewegung der Schneide 2 entspricht der Bewegung bei einer aus dem Stand der Technik bekannten Abwälzfräse. Erfindungsgemäß ist die Schneide 2 mit der Aufnahme 5 an dem Träger 4 beweglich angeordnet, wobei die Schneide 2 und die Aufnahme 5 relativ zu dem Träger 4 beweglich sind. Durch eine Bewegung der Aufnahme 5 wird die Schneide über einen bestimmten Zeitraum parallel zur Oberfläche des Werkstücks 3 bewegt. Eine Bewegung der Schneide 2 parallel zur Oberfläche des Werkstücks 3 entspricht der Bewegung eines aus dem Stand der Technik bekannten Hobels. Diese zeitweise parallele Bewegung der Schneide 2 wird erreicht durch die Überlagerung der Umlaufbewegung mit einer Bewegung der Schneide 2 aus der Umlaufbahn heraus. Letztere ist durch den Pfeil 12 angedeutet. Die Überlagerung der mit den Pfeilen 11 und 12 angedeuteten Bewegungen ergibt die in Figur 3 mit einer Strichlinie gekennzeichnete Bahn der Arbeitsbewegung 16 der Schneide 2.

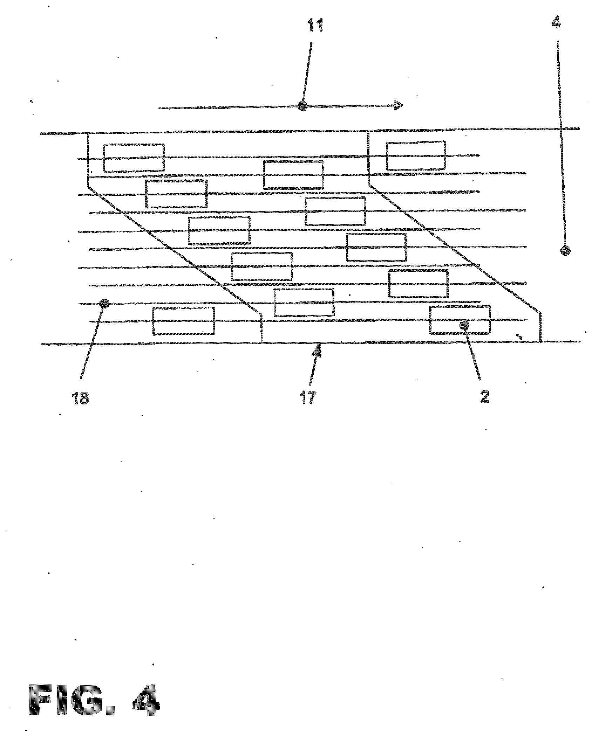

Die Vorrichtung weist mehrere jeweils an einer Aufnahme 5 lösbar befestigte Schneiden 2 auf. Über den Umfang des Trägers 4 sind, wie in Figur 1 dargestellt, eine Vielzahl von Aufnahmen 5 hintereinander und, wie in Figur 4 dargestellt, nebeneinander angeordnet. In Figur 3 ist eine als Stößel ausgebildete Aufnahme 5 detailliert dargestellt. Die Aufnahme 5 ist in dem Träger 4 beweglich angeordnet und weist eine Nocke 6 auf. Während des Umlaufs des Trägers 4 wird die Nocke 6 der Aufnahme 5 an einem unverschieblich, jedoch frei drehbaren Betätigungskörper 7 vorbeibewegt. Bei einem Kontakt zwischen Betätigungskörper und Nocke 6 wird die Aufnahme 5 entsprechend der Geometrie der Nocke 6 von dem Betätigungskörper 7 wegbewegt. Diese Bewegung ist mit Pfeil 12 angedeutet. Die Aufnahme 5 weist eine Rückstelleinrichtung 14 auf. Wenn die Nocke 6 den Betätigungskörper 7 nicht mehr berührt, wird die Aufnahme 5 durch die Rückstelleinrichtung 14 in ihre Ausgangslage bewegt.

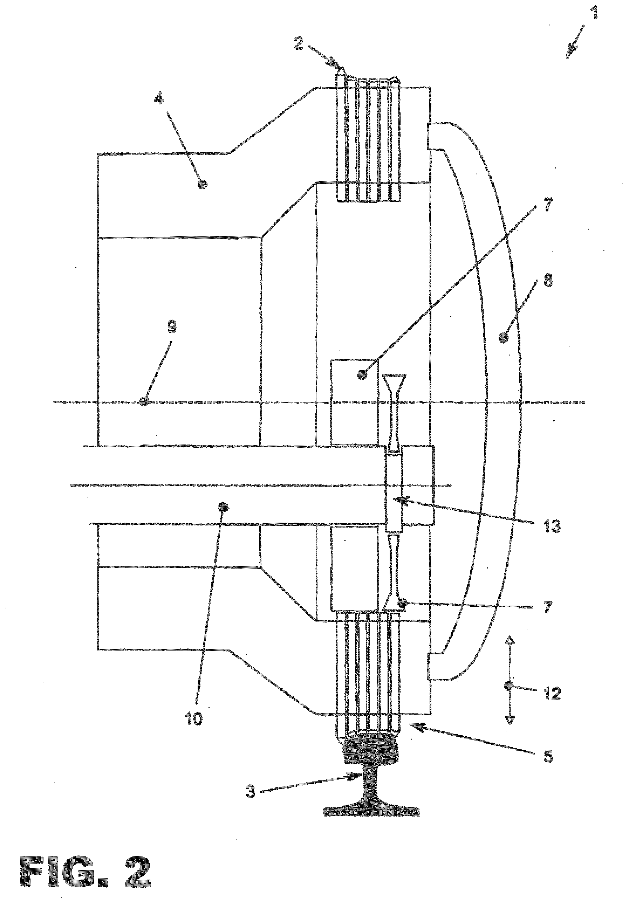

Die Figur 2 zeigt einen Schnitt durch die Vorrichtung 1. Der um eine Achse 9 rotierende Träger 4 weist umlaufend zahlreiche nebeneinander angeordnete Aufnahmen 5 auf. Zur Bearbeitung des Werkstücks 3 werden - durch das Wirken des Betätigungskörpers 7 auf die Aufnahme 5 - die an den Aufnahmen 5 befestigten Schneiden 2 mit den Aufnahmen 5 in Richtung des Werkstücks 3 bewegt. In der gezeigten Ausführungsform weist die Vorrichtung 1 voneinander unabhängig auf einer Welle 10 frei drehbar angeordnete Betätigungskörper 7 auf. Über die Welle 10 werden die von den Betätigungskörpem 7 zur Auslenkung der Schneiden 2 aufgenommenen Kräfte abgetragen. Die Welle 10 ist über einen Bügel 19 mit der Vorrichtung 1 verbunden. Der in der Figur 1 dargestellte Bügel 19 stützt die Welle 10 gegen ein Ausweichen bei Krafteinwirkung ab.

Der der Verkleidung 8 zugewandte Betätigungskörper 7 ist auf einem exzentrischen Bereich 13 der Welle 10 frei drehbar angeordnet. Dies zeigt besonders gut Figur 2. Die Welle 10 ist drehbeweglich. Durch ein Verdrehen der Welle 10 - beispielsweise um 180° - wird die Lage des exzentrischen Bereichs 13 derart verändert, dass der an dem exzentrischen Bereich 13 angeordnete Betätigungskörper 7 nicht mehr auf die diesem Betätigungskörper 7 zugeordneten Aufnahmen 5 einwirken kann. Diese Aufnahmen 5 werden nicht mehr ausgelenkt, wodurch die Schneiden 2 dieser Aufnahmen 5 das Werkstück 3 nicht mehr bearbeiten, während die anderen Schneiden 2 weiterhin das Werkstück 3 bearbeiten. Durch die Verstellung des exzentrischen Bereichs 13 ist jedoch nicht nur ein Ausblenden einzelner Schneiden 2 möglich. Wird die Welle 10 nur wenig gedreht, beispielsweise um 20°, dann wird der Eingriff der Schneiden 2 in das Werkstück 3 verringert, aber nicht unterbrochen. So ist es möglich, die Querschnittsgeometrie des Werkstücks 3 während und/oder mittels der Bearbeitung mit der Vorrichtung 1 zu variieren.

Figur 4 zeigt einen Ausschnitt der Ablauffläche des Trägers 4 mit mehreren hinter- und nebeneinander angeordneten Schneiden 2. Die Schneiden 2 sind auf zueinander versetzten Spurbahnen 18 angeordnet, um Spurbilder auf der bearbeiteten Oberfläche des in den Figuren 1 bis 3 dargestellten Werkstücks 3 zu unterbinden. Der in die Richtung des Pfeils 11 bewegte Träger 4 ist aus einzelnen Segmenten 17 zusammengesetzt. Die Segmente 17 sind untereinander zu einem Träger 4 lösbar fixierbar. Die Teilung des Trägers 4 in Segmente 17 ermöglicht einen schnellen Wechsel der Schneiden 2.

## Patentansprüche

1. Vorrichtung (1) mit einer geometrisch bestimmten Schneide (2) zum spanabhebenden Bearbeiten eines Werkstücks (3), insbesondere von Schienen eines Gleiskörpers, die einen umlaufend antreibbaren Träger (4) aufweist, an dem die Schneide (2) mittels einer Aufnahme (5) angeordnet ist, wobei die Schneide (2) mit der Aufnahme relativ zu dem Träger (4) beweglich an dem Träger (4) angeordnet ist, wobei die Eingrifftiefe der Schneide (2) mittels eines einstellbaren Betätigungskörpers (7) während der Bearbeitung des Werkstücks (3) veränderbar ist.

2. Vorrichtung (1) nach Anspruch 1, **dadurch gekennzeichnet, dass** der Träger (4) als ein um eine Achse (9) rotatorisch auf einer Kreisbahn bewegbarer Körper, insbesondere als Rad oder Scheibe, ausgebildet ist.

3. Vorrichtung (1) nach Anspruch 1 oder 2, **dadurch gekennzeichnet, dass** die Aufnahme (5) als ein eine Nocke (6) aufweisender Stößel ausgeführt ist.

4. Vorrichtung (1) nach zumindest einem der vorhergehenden Ansprüche 1 bis 3, **dadurch gekennzeichnet, dass** an dem Träger (4) eine Vielzahl von Schneiden (2) hinter- und/oder nebeneinander, insbesondere versetzt zueinander, angeordnet sind.

5. Vorrichtung (1) nach zumindest einem der vorhergehenden Ansprüche 1 bis 4, **dadurch gekennzeichnet, dass** die Vorrichtung (1) auf dem insbesondere in Form von Schienen eines Gleiskörpers ausgebildeten Werkstück (3) verfahrbar ist.

6. Vorrichtung (1) nach zumindest einem der vorhergehenden Ansprüche 1 bis 5, **dadurch gekennzeichnet, dass** die Vorrichtung (1) eine Verkleidung (8) aufweist.

7. Vorrichtung (1) nach zumindest einem der vorhergehenden Ansprüche 1 bis 6, **dadurch gekennzeichnet, dass** die nebeneinander und/oder hintereinander angeordneten Schneiden (2) entsprechend der Querschnittsgeometrie des Werkstücks (3) ausgebildet sind.

## Claims

1. Apparatus (1) having a geometrically defined cutter (2) for the stock-removing machining of a workpiece (3), in particular rails of a track body, which apparatus has a revolvingly drivable carrier (4) on which the cutter (2) is disposed by means of a receiver (5), wherein the cutter (2), with the receiver, is disposed on the carrier (4) so as to be movable relative to the carrier (4), wherein the engagement depth of the cutter (2) can be altered, by means of a settable actuating body (7), during the machining of the workpiece (3).

2. Apparatus (1) according to Claim 1, **characterized in that** the carrier (4) is realized as a body, in particular as a wheel or disc, that can be moved in a rotatory manner, on a circular path, about an axis (9).

3. Apparatus (1) according to Claim 1 or 2, **characterized in that** the receiver (5) is realized as a plunger that has a cam (6).

4. Apparatus (1) according to at least one of the preceding Claims 1 to 3, **characterized in that** a multiplicity of cutters (2) are disposed in series and/or next to one another, in particular offset in relation to one another, on the carrier (4).

5. Apparatus (1) according to at least one of the preceding Claims 1 to 4, **characterized in that** the apparatus (1) can be moved on the workpiece (3) realized, in particular, in the form of rails of a track body.

6. Apparatus (1) according to at least one of the preceding Claims 1 to 5, **characterized in that** the apparatus (1) has a casing (8).

7. Apparatus (1) according to at least one of the preceding Claims 1 to 6, **characterized in that** the cutters (2) disposed next to one another and/or in series are realized according to the cross-sectional geometry of the workpiece (3).

## Revendications

1. Dispositif (1), comprenant une arête de coupe (2) de géométrie spécifique, pour l'usinage par enlèvement de copeaux d'une pièce (3), notamment de rails d'un corps de voie, qui présente un support (4) pouvant être entraîné en rotation, sur lequel est disposée l'arête de coupe (2) au moyen d'un logement (5),
dans lequel l'arête de coupe (2) est disposée sur le support (4) avec le logement de manière déplaçable par rapport au support (4),
la profondeur d'engagement de l'arête de coupe (2) peut être modifiée au moyen d'un corps d'actionnement ajustable (7) pendant l'usinage de la pièce (3).

2. Dispositif (1) selon la revendication 1, **caractérisé en ce que** le support (4) est réalisé sous la forme d'un corps déplaçable en rotation autour d'un axe (9) sur une trajectoire circulaire, en particulier sous forme de roue ou de disque.

3. Dispositif (1) selon la revendication 1 ou 2, **caractérisé en ce que** le logement (5) est réalisé sous la forme d'un poussoir présentant une came (6).

4. Dispositif (1) selon au moins l'une quelconque des revendications précédentes 1 à 3, **caractérisé en ce qu'**une pluralité d'arêtes de coupe (2) est disposée sur le support (4) les unes derrière les autres et/ou les unes à côté des autres, en particulier de manière décalée les unes par rapport aux autres.

5. Dispositif (1) selon au moins l'une quelconque des revendications précédentes 1 à 4, **caractérisé en ce que** le dispositif (1) peut être déplacé sur la pièce (3) réalisée notamment sous forme de rails d'un corps de voie.

6. Dispositif (1) selon au moins l'une quelconque des revendications précédentes 1 à 5, **caractérisé en ce que** le dispositif (1) présente un habillage (8).

7. Dispositif (1) selon au moins l'une quelconque des revendications précédentes 1 à 6, **caractérisé en ce que** les arêtes de coupe (2) disposées les unes à côté des autres et/ou les unes derrière les autres sont réalisées de manière correspondant à la géométrie en section transversale de la pièce (3).
